# EUROPEAN PATENT APPLICATION

(11) **EP 4 848 658 A1**
(43) Date of publication of application: **02.12.2026**
(21) Application number: 25179560.5
(22) Date of filing: 28.05.2025
(51) Int. Cl.: H04L 9/40, G06F 21/62, H04W 12/00, H04W 12/02

(54) **ANONYMOUS DATA REPORTING IN PARTICIPATORY SENSING**

(71) Applicant: Airbus S.A.S., 31700 Blagnac (FR)
(72) Inventor: VYAS, Nilesh, Taufkirchen (DE)
(74) Representative: OTN Airbus SAS

(57) **Abstract**

The present invention relates to a method for anonymous data reporting in participatory sensing (systems). Proposed is a method (100) for data reporting in participatory sensing, the method being applied to a server. The method comprises: receiving (102) a sensing task request from a task requester; selecting (104) a group of participants (P1, P2, P3, Pn) based on the sensing task request; establishing (106) secure communication keys (S₁₂, ..., S₃ₙ) between participants (P1, P2, P3, Pn); receiving (108), from each participant (P1, P2, P3, Pn), a slot reservation message (SRM) that is secured using participant-specific encryption; processing (110) the received slot reservation messages (SRMs) using a privacy-preserving aggregation technique to produce an anonymized slot assignment structure; coordinating (112) resolution of slot conflicts to ensure that each participant (P1, P2, P3, Pn) is assigned a unique submission slot; instructing (114) each participant (P1, P2, P3, Pn) to submit a data report using the respective assigned submission slot; receiving (116), from each participant (P1, P2, P3, Pn), a secured data message associated with the assigned submission slot; aggregating (118) the received secured data messages to construct an anonymized data report; and transmitting (120) the anonymized data report to the task requester.

## Description

### TECHNICAL FIELD OF THE INVENTION

The present invention relates to a method for anonymous data reporting in participatory sensing (systems). More particularly, the invention relates to a method for data reporting in participatory sensing, a method for initiating and receiving data in participatory sensing, and a method for anonymously contributing data in participatory sensing. The present invention further relates to a server, a task requester apparatus, and a participant device.

### TECHNICAL BACKGROUND

Participatory sensing is used in, for example, environmental or personal data monitoring, wherein a number of participants collect data using their mobile, e.g. intelligent, devices. However, the exploitation of data generated by personal end sensing devices endangers the privacy of the participants.

In more detail, the rapid proliferation of loT sensing devices has enabled large-scale participatory sensing. In such applications, a system comprises a task requester and numerous participants equipped with mobile sensing devices. Participants voluntarily collect sensor data as per the task requester's instructions and periodically report this data back. The task requester then processes the reported data to extract valuable statistics tailored to specific requirements. These statistics are utilized in various monitoring applications, including, for example, personal health, sports and exercise, social media enhancement, air quality, thermal and noise monitoring, traffic alerts, and wireless indoor localization, to name a few examples.

Despite the benefits, the use of personal sensing devices raises significant privacy concerns. Data shared by participants is accessible to authorized clients and servers, and while encryption can secure communication data, it does not protect sensitive metadata. This metadata, which may include, for example, identities, call signatures, timestamps, transmission duration, and user locations, can compromise user privacy. Standard cryptographic protocols primarily protect the content of communications but fail to obscure metadata from network observers. Consequently, traffic analysis attacks can exploit this metadata to reveal information about communicating parties, posing a threat to user privacy.

### SUMMARY OF THE INVENTION

It is an object of the invention to enable privacy-preserving, secure, and reliable data reporting in participatory sensing systems, without revealing the identities of individual data contributors. This object is solved by the subject-matter of the appended independent claims. Further embodiments are defined in the appended dependent claims and the description below.

According to a first aspect, there is provided a method for data reporting in participatory sensing. The method is applied to a server. The method comprises receiving a sensing task request from a task requester. The method further comprises selecting participants, e.g. a group of participants, based on the sensing task request. Further, the method comprises establishing secure communication keys between participants; receiving, from each participant, a slot reservation message that is secured using participant-specific encryption. The method further comprises processing the received slot reservation messages using a privacy-preserving aggregation technique to produce an anonymized slot assignment structure. Further, the method comprises coordinating resolution of any slot conflicts to ensure that each participant is associated with an assigned, e.g. unique, submission slot. The method further comprises instructing each participant to submit a data report using the respective assigned slot. Further, the method comprises receiving, from each participant, a secured data message associated with the assigned slot. The method further comprises aggregating the received secured data messages to construct an anonymized data report; and transmitting the anonymized data report to the task requester.

The method for data reporting in participatory sensing provides robust privacy guarantees by enabling participants to anonymously reserve submission slots and contribute encrypted sensing data without disclosing their identities. By establishing secure communication keys, optionally using quantum key distribution (QKD), between participants and using a privacy-preserving aggregation technique, such as XOR-based mixing, the method ensures that neither the server nor an observer can link data submissions to specific contributors. Slot conflicts are resolved iteratively without compromising anonymity, and the final data report is constructed by aggregating encrypted inputs in a way that conceals the origin of each message. This approach eliminates the need for a trusted central aggregator, supports low-overhead deployment on mobile or IoT devices, and offers resilience to traffic analysis attacks, making it suitable for privacy-sensitive applications such as environmental monitoring, public health reporting, or urban sensing. The method allows multiple participants to anonymously report their sensory data to the server.

Further, the method offers information theoretic security, integrity and anonymity guarantee. The method leverages the inherent security properties of QKD to maintain the confidentiality and integrity of the transmitted data, thereby providing a robust framework for anonymous communication. The method ensures anonymity and security against a quantum adversary within a group containing at least two honest participants. Even if malicious members collude with system entities and global eavesdroppers, they cannot determine which honest participants submitted specific sensing data with non-negligible probability. The method is easy to implement and offers flexibility and scalability as compared to the other prior art solutions. The method augments the capabilities of fully-connected Quantum Key Distribution (QKD) networks by eliminating the need for trusted nodes.

As used herein, the sensing task request may define the purpose of data collection, such as air quality monitoring in a specified geographic region, wherein the sensing task is not limited herein. For example, it may include location boundaries, a time window, and a requirement for certain sensor capabilities. The server receives this task from the task requester, which may be a device, apparatus, system, application, or organization.

Further, as used herein, the participants may be selected, optionally in groups, based on attributes such as their location, device capabilities, or availability. Selection may be performed automatically by the server or may be the result of participants opting in to participate in the task.

The secure communication keys may be established between all selected participants, for example, pairwise. These parameters may consist of symmetric or asymmetric cryptographic keys or be derived using quantum key distribution, QKD, for enhanced security against quantum-capable adversaries.

Further, as used herein, each participant may generate a slot reservation message, which includes a pseudonymous identifier. This message may be secured using encryption based on the secure communication keys known only to the participant and their peers. The slot reservation message may be used to anonymously claim a position in a shared data structure without disclosing the identity of the sender.

As used herein, the received slot reservation messages may be aggregated by the server using a privacy-preserving aggregation technique. This may include, for example, a bitwise XOR operation across encrypted inputs, mix-network protocols, homomorphic encryption, DC-net-style mixing, or any secure aggregation protocol that ensures anonymity. The aggregation process yields an anonymized slot assignment structure, where each slot corresponds to a participant but without disclosing their identity. In other words, the term "privacy-preserving aggregation technique" may refer to any method for combining slot reservation messages or data submissions in a manner that prevents linkability to individual participants. The term "anonymized slot assignment structure" may refer to a data structure such as a slot vector or index map that uniquely allocates submission positions to participants without revealing their identities.

If more than one participant attempts to reserve the same slot, the result is a slot conflict. These conflicts are detected by the server, and affected participants are requested to reattempt slot reservation using a different pseudonym or slot. This process is repeated until all participants have uniquely assigned submission slots.

Participants are then instructed to submit their sensing data using their assigned slot. Each participant constructs a secured data message containing the collected sensing data, places it in the correct slot within a zero-padded vector and encrypts it using previously established secure communication keys. This ensures that only the intended message appears in the final vector, and its origin remains anonymous.

The server receives all secured data messages and aggregates them into a final anonymized data report. This aggregation may also rely on XOR operations or other combining methods. The result is a single vector or structure in which each entry contains a data submission, but no metadata that could identify the sender. This report is transmitted to the task requester as the output of the method.

In an embodiment, the secure communication keys may be established by performing quantum key distribution, QKD, between each pair of participants. QKD provides unconditional security against future quantum attacks and ensures that encryption keys are unique and private. The keys are then used for message encryption via XOR or similar operations.

According to an embodiment, each slot reservation message may comprise a pseudonymous identifier generated by the participant and having a fixed bit length. Such identifiers ensure anonymity while allowing compact message formatting. A typical pseudonym may be 64 or 128 bits and randomized for each session.

In an embodiment, the privacy-preserving aggregation technique may comprise a bitwise XOR operation applied across the secured slot reservation messages. XOR aggregation ensures that, if only one message occupies a slot, it is reconstructible. If multiple messages overlap, the result becomes noise, indicating a collision.

According to an embodiment, the anonymized slot assignment structure may comprise a vector of predefined slot positions, each configured to receive a single pseudonymous identifier. This vector can be binary or multi-bit and may be published to participants to confirm slot success or failure.

In an embodiment, coordinating resolution of slot conflicts may comprise identifying overlapping slot reservation messages and instructing affected participants to repeat the slot reservation procedure. Collisions may be detected via checksum failures or conflicting bits. Participants retry with new pseudonyms until a collision-free assignment is reached.

According to an embodiment, each secured data message may comprise sensor data collected by a mobile device associated with the respective participant. The sensor data may include environmental parameters (e.g., CO₂ levels, temperature), location, or biometric inputs, depending on the sensing task.

In an embodiment, the method may further comprise receiving, from each participant, a validation message indicating whether the participant's secured data message was correctly included in the anonymized data report. This feedback loop ensures integrity without revealing slot ownership, as the flags can be aggregated without identity linkage.

According to an embodiment, the method may further comprise repeating the receiving and aggregating of the secured data messages in response to any validation message indicating an error. This allows the system to recover from data corruption or transmission issues and ensures reliable delivery to the requester.

In an embodiment, the anonymized data report may comprise a sequence of encrypted data blocks, each corresponding to one assigned submission slot. Each block may be indexed by position only, with no metadata linking it to a participant, preserving anonymity in the final output.

According to a second aspect, there is provided a method for initiating and receiving data in participatory sensing. The method is applied to a task requester (apparatus). The method comprises generating a sensing task request, optionally comprising one or more sensing parameters including at least one of a data type, a geographic region, and a required temporal or spatial resolution. The method further comprises transmitting the sensing task request to a server configured to select participants and coordinate anonymous data reporting. Further, the method comprises receiving, from the server, an anonymized data report generated by aggregating secured sensing data messages submitted by a group of participants in response to the sensing task request. The method further comprises processing the anonymized data report to extract sensing insights without revealing individual participant identities.

According to a third aspect, there is provided a method for anonymously contributing data in participatory sensing. The method is applied to a participant device. The method comprises receiving a sensing task request from a server. The method further comprises establishing secure communication keys with one or more peer participants. Further, the method comprises generating a slot reservation message comprising a pseudonymous identifier. The method further comprises securing the slot reservation message using participant-specific encryption based on the established secure communication keys. Further, the method comprises submitting the secured slot reservation message to the server. The method further comprises determining, based on feedback from the server, whether a unique submission slot has been successfully assigned. Further, the method comprises generating a secured data message comprising sensor readings in accordance with the sensing task request. The method further comprises associating the secured data message with the assigned submission slot. Further, the method comprises securing the data message using participant-specific encryption. The method further comprises transmitting the secured data message to the server to enable anonymous aggregation.

According to a fourth aspect, there is provided a task requester apparatus configured for initiating and receiving data in participatory sensing. The apparatus comprises a communication interface configured to transmit a sensing task request to a server and receive an anonymized data report in response. The apparatus further comprises a task generation module configured to generate the sensing task request, optionally comprising parameters including at least one of a data type, a geographic region, and a temporal resolution. Further, the apparatus comprises a processing module configured to extract sensing insights from the anonymized data report without revealing participant identities.

According to a fifth aspect, there is provided a participant device configured to contribute data anonymously in participatory sensing. The device comprises a receiver configured to obtain a sensing task request from a server. The device further comprises key management logic configured to establish secure communication keys with one or more peer participant devices. Further, the device comprises reservation logic configured to generate a slot reservation message including a pseudonymous identifier and to encrypt the message using participant-specific secure communication keys. The device further comprises a sensing unit configured to collect sensing data according to the sensing task request. Further, the device comprises a transmitter configured to send the encrypted slot reservation message and a secured data message corresponding to an assigned submission slot to the server.

According to a sixth aspect, there is provided a server configured to support anonymous data reporting in participatory sensing. The server comprises a communication interface configured to receive a sensing task request from a task requester and to interact with a group of participant devices. The server further comprises a processor configured to identify eligible participants based on the sensing task request. Further, the server comprises aggregation logic configured to process encrypted slot reservation messages using a privacy-preserving aggregation technique to generate an anonymized slot assignment structure. Further, the server comprises conflict resolution logic configured to detect slot conflicts and to coordinate re-submission of slot reservation messages by affected participants. The server further comprises data aggregation logic configured to receive secured data messages from the participants and to construct an anonymized data report for delivery to the task requester.

According to a further aspect of the invention, a computer program is provided, the computer program comprising instructions which, when executed on a processor of a server, cause the server to perform the method according to the first aspect.

According to another aspect of the invention, a computer-readable medium is provided, the computer-readable medium storing a computer program comprising instructions which, when executed on a processor of a server, cause the server to perform the method according to the first aspect.

According to a further aspect of the invention, a computer program is provided, the computer program comprising instructions which, when executed on a processor of a task requester apparatus, cause the task requester apparatus to perform the method according to the second aspect.

According to another aspect of the invention, a computer-readable medium is provided, the computer-readable medium storing a computer program comprising instructions which, when executed on a processor of a task requester apparatus, cause the task requester to perform the method according to the second aspect.

According to a further aspect of the invention, a computer program is provided, the computer program comprising instructions which, when executed on a processor of a participant device, cause the participant device to perform the method according to the third aspect.

According to another aspect of the invention, a computer-readable medium is provided, the computer-readable medium storing a computer program comprising instructions which, when executed on a processor of a participant device, cause the participant device to perform the method according to the third aspect.

The above-described aspects, embodiments, variants and examples can of course be combined without this being explicitly described. Each of the described variants and each example are thus to be regarded as optional for each of the aspects, embodiments, variants and examples or even combinations thereof. The present disclosure is thus not limited to the individual embodiments and variants in the described order or a certain combination of the aspects and variants.

### BRIEF SUMMARY OF THE DRAWINGS

The present invention is explained in more detail below with reference to the embodiments shown in the schematic figures:
- Fig. 1: shows a schematically an exemplary participatory sensing system involving a server, task requester, and multiple participant devices, according to an embodiment.
- Fig. 2: shows a schematic representation of n slots allocated for n participants in a participatory sensing system, according to an embodiment.
- Fig. 3: shows an exemplary participant device generating and securing data messages, according to an embodiment.
- Fig. 4: shows an illustrative diagram of a privacy-preserving aggregation technique using bitwise XOR operations across secured slot reservation messages from participants, according to an embodiment.
- Fig. 5: shows an illustrative diagram of slot reservation messages and secure communication keys in participatory sensing, according to an embodiment.
- Fig. 6: shows a schematic block diagram of an exemplary server, according to an embodiment.
- Fig. 7: shows a schematic block diagram of an exemplary participant device, according to an embodiment.
- Fig. 8: shows a schematic block diagram of an exemplary task requester apparatus, according to an embodiment.
- Fig. 9: shows a schematic flowchart of a method for initiating and receiving data in participatory sensing, according to an embodiment.
- Fig. 10: shows a schematic flowchart of a method for data reporting in participatory sensing, according to an embodiment.
- Fig. 11: shows a schematic flowchart of a method for anonymously contributing data in participatory sensing, according to an embodiment.

In the figures of the drawing, elements, features and components which are identical, functionally identical and of identical action are denoted in each case by the same reference designations unless stated otherwise.

### DESCRIPTION OF EXEMPLARY EMBODIMENTS

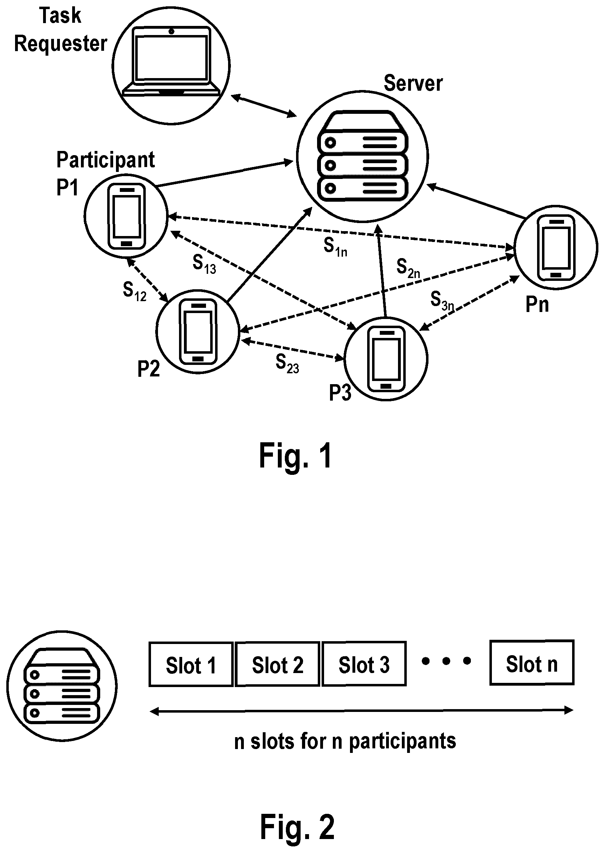

Fig. 1 shows a schematic architecture of a participatory sensing system involving a task requester, a server, and multiple participant devices. The task requester, exemplary illustrated as a computing device, initiates the sensing task by transmitting a sensing task request to the server. The server, which may also be referred to as a service provider, is illustrated as a centralized unit responsible for managing communications and data processing tasks. It serves as the hub for interactions with participant devices, which are exemplary illustrated as mobile devices labeled P1, P2, P3, and Pn.

The task requester (apparatus) is an entity seeking to gather specific data through a designated participatory sensing. The server serves as a connection point between the nodes, linking the task requester with the participants. As an intermediary entity, the server manages the allocation of networking tasks from TRs to selected participants and facilitates the reverse transfer of sensing data reports. It is assumed to be neutral but susceptible to external attacks with the aim of eavesdropping. The participants, i.e. the participant devices, may be regarded as trusted mobile devices, e.g. smart devices, sensors, or the like. The owners of these devices may be volunteers participating in sensing tasks, reporting sensing data through the server to the task requester.

The server is configured to receive the sensing task request from the task requester. Further, the server is configured to select a group of the participants P1, P2, P3, Pn based on the sensing task request. The server is further configured to establish secure communication keys S₁₂, ..., S₃ₙ between the participants P1, P2, P3, Pn. Every pair of participants Pᵢ and Pⱼ shares a secure communication key, e.g. a common secret bit string, Sᵢⱼ of length equal to the length of a vector L_{V} where Sᵢⱼ = Sⱼᵢ. This common pairwise secret is established, for example, by performing Quantum Key Distribution (QKD) between each pair of the participants. Each participant, therefore, share (N - 1) pairwise secure communication keys with other participants. Further, the server is configured to receive, from each participant P1, P2, P3, Pn, a slot reservation message SRM that is secured using participant-specific encryption. The server is further configured to process the received slot reservation messages SRMs using a privacy-preserving aggregation technique, such as a secure mixing function and/or aggregation via XOR, to produce an anonymized slot assignment structure, such as a slot reservation vector. Further, the server is configured to coordinate resolution of slot conflicts to ensure that each participant P1, P2, P3, Pn is assigned a unique submission slot. The server is further configured to instruct each participant P1, P2, P3, Pn to submit a data report using the respective assigned submission slot. Further, the server is configured to receive, from each participant P1, P2, P3, Pn, a secured data message, such as a sensing data vector and/or an encrypted sensing message, associated with the assigned submission slot. The server is further configured to aggregate the received secured data messages to construct an anonymized data report, such as an aggregated sensing result and/or a combined sensing data vector. Further, the server is configured to transmit the anonymized data report to the task requester.

The task requester is configured to generate the sensing task request comprising one or more sensing parameters. Further, the task requester is configured to transmit the sensing task request to the server. The task requester is further configured to receive, from the server, an anonymized data report generated by aggregating secured sensing data messages submitted by the participants P1, P2, P3, Pn in response to the sensing task request. Further, the task requester is configured to process the anonymized data report to extract sensing insights without revealing individual participant P1, P2, P3, Pn identities.

The respective participant device or the respective participant P1, P2, P3, Pn is configured to receive the sensing task request from the server. Further, the participant device is configured to establish secure communication keys S₁₂, ..., S₃ₙ with one or more peer participants P1, P2, P3, Pn. The participant device is further configured to generate a slot reservation message SRM comprising a pseudonymous identifier. Further, the participant device is configured to secure the slot reservation message SRM using participant-specific encryption based on the established secure communication keys S₁₂, ..., S₃ₙ. The participant device is further configured to submit the secured slot reservation message SRM to the server. Further, the participant device is configured to determine, based on feedback from the server, whether a unique submission slot has been successfully assigned. The participant device is further configured to generate a secured data message comprising sensor readings in accordance with the sensing task request. Further, the participant device is configured to associate the secured data message with the assigned submission slot. The participant device is further configured to secure the data message using the established secure communication keys S₁₂, ..., S₃ₙ. The participant device is further configured to transmit the secured data message to the server to enable anonymous aggregation.

In at least some embodiment, the secure communication keys S₁₂, ..., S₃ₙ may be established by performing quantum key distribution, QKD, between each pair of participants. QKD provides unconditional security against future quantum attacks and ensures that encryption keys are unique and private. The keys are then used for message encryption via XOR or similar operations.

Further, in at least some embodiments, each slot reservation message may comprise a pseudonymous identifier generated by the participant and having a fixed bit length. Such identifiers ensure anonymity while allowing compact message formatting. A typical pseudonym may be 64 or 128 bits and randomized for each session.

Further, in at least some embodiments, the privacy-preserving aggregation technique may comprise a bitwise XOR operation applied across the secured slot reservation messages. XOR aggregation ensures that, if only one message occupies a slot, it is reconstructible. If multiple messages overlap, the result becomes noise, indicating a collision.

Further, in at least some embodiments, the anonymized slot assignment structure may comprise a vector of predefined slot positions, each configured to receive a single pseudonymous identifier. This vector can be binary or multi-bit and may be published to participants to confirm slot success or failure.

Further, in at least some embodiments, coordinating resolution of slot conflicts may comprise identifying overlapping slot reservation messages and instructing affected participants to repeat the slot reservation procedure. Collisions may be detected via checksum failures or conflicting bits. Participants retry with new pseudonyms until a collision-free assignment is reached.

Further, in at least some embodiments, each secured data message may comprise sensor data collected by a mobile device associated with the respective participant. The sensor data may include environmental parameters (e.g., CO₂ levels, temperature), location, or biometric inputs, depending on the sensing task.

Further, in at least some embodiments, the server may be configured to receive, from each participant, a validation message indicating whether the participant's secured data message was correctly included in the anonymized data report. This feedback loop ensures integrity without revealing slot ownership, as the flags can be aggregated without identity linkage.

Further, in at least some embodiments, the server may be further configured to repeat the receiving and aggregating of the secured data messages in response to any validation message indicating an error.

Further, in at least some embodiments, the anonymized data report may comprise a sequence of encrypted data blocks, each corresponding to one assigned submission slot. Each block may be indexed by position only, with no metadata linking it to a participant, preserving anonymity in the final output.

Fig. 2 shows a schematic representation of n slots allocated for n participants in a participatory sensing system available with the server.

The methods, devices, apparatuses and systems described herein may use a bulk transfer protocol. The bulk transfer protocol aims to arrange a random sequence of N participants' data in a vector consisting of N slots. Let each participant Pi initially possess messages msgᵢ of length L_{msg}, for i ∈ {1 ... N}, that they intend to submit. The server publicly disclosed the length of the whole vector, denoted as L_{V} = N. L_{msg} contains the N slots of each length L_{msg}. It may be assumed that each participant Pᵢ knows its own dedicated slot position in the vector but remains unaware of the slots assigned to other participants.

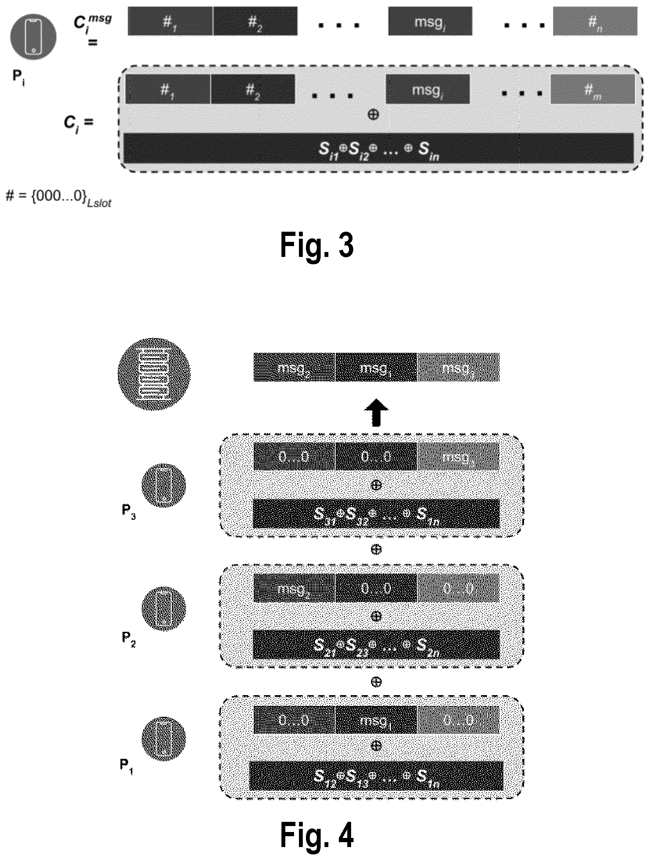

Fig. 3 shows an exemplary participant device Pᵢ generating and securing a (secured) data message Cᵢ^{msg}. In other words, Fig. 3 illustrates the generation of a message vector, i.e. the secured data message, by a participant.

In Fig. 3, Cᵢ denotes a ciphertext vector generated by the participant Pᵢ by performing an XOR operation on the message string Cᵢ^{msg} and all the N-1 pairwise secure communication keys, i.e. Cᵢ = Cᵢ^{msg} ⊕ Sᵢ₁ ⊕ ··· ⊕ Sᵢ₍ᵢ₋₁₎ ⊕ Sᵢ₍ᵢ₊₁₎ ⊕ ··· ⊕ S_{iN}. The encryption process is visually represented by the shaded area and involves the application of a privacy-preserving aggregation technique, specifically a bitwise XOR operation. The XOR operation is applied across the secure communication keys Si1, Si2, ..., Sin, which are established between the participant device and its peers. This operation results in a composite encryption key that enhances the security and anonymity of the transmitted data.

The data message Cᵢ^{msg} is structured in a sequence comprising identifiers #1, #2, ..., #n, followed by the actual message content msgᵢ. Each identifier # is represented by a fixed bit length, denoted as {000...0} Lₛₗₒₜ, which allows for maintaining uniformity and facilitating the subsequent encryption process. The identifiers # serve as pseudonymous markers, ensuring that the participant's identity remains concealed during data transmission.

Each participant Pᵢ generates the message string Cᵢ^{msg} of length Lᵥ, such that the intended message msgᵢ to be submitted is placed at the dedicated slot, and the rest of the slots are padded with all zero, i.e., ${C}_{i}^{msg} = {{\left.00⋯0\right| {{{msg}_{i}}^{︷}}^{Lmsg} \left|00⋯0\right.}_{︸}}_{Lv}$, where | denotes concatenation. Subsequently, the participant Pᵢ proceeds to generate the ciphertext vector Cᵢ by performing an XOR operation on the message string Cᵢ^{msg} and all the N-1 pairwise secure communication keys, i.e. Cᵢ = Cᵢ^{msg} ⊕ Sᵢ₁ ⊕ ··· ⊕ Sᵢ₍ᵢ₋₁₎ ⊕ Sᵢ₍ᵢ₊₁₎ ⊕ ··· ⊕ S_{iN}. Each participant transmits the ciphertext vector Cᵢ to the server, where they are collectively XORed, C = C₁ ⊕ C₂ ⊕ ··· ⊕ C_{N}= msg_{πN(1)} | msg_{πN(2)} |···| msg_{πN(N)}. In the end, the server acquires a concatenation of all data in the vector C, where msg_{πN(i)} denotes the random permutation of msg₁, msg₂, ... , msg_{N}. The server has received all the messages from the participants. As the slot position is only know to the individual participant, only the owner of a message knows the association between the message and themselves.

In Fig. 3, the dashed boundary surrounding the Cᵢ structure indicates the encapsulation of the encrypted message, signifying that the entire data packet, including identifiers and message content, is securely transmitted to the server. The server, equipped with aggregation logic, processes these encrypted messages to construct an anonymized data report, which is then delivered to the task requester.

Fig. 4 shows an illustrative diagram of a privacy-preserving aggregation technique using bitwise XOR operations across secured slot reservation messages from participants. In particular, Fig. 4 illustrates a bulk transfer protocol for exemplary three participants.

The participants, P1, P2, and P3, are depicted with their respective encrypted messages, msg₁, msg₂, and msg₃. Each participant's message is shown within a dashed boundary, indicating the encapsulation of the data within a secure communication framework. The messages are aligned horizontally, representing the sequential submission of data to the aggregation system.

Below each participant's message, a series of secure communication keys are shown, denoted as S₁₂, S₁₃, S₂₃, S₃₂, and so forth. These keys are utilized in a bitwise XOR operation, as indicated by the "+" symbol in the figure. The XOR operation is a component of the privacy-preserving aggregation technique, allowing for the combination of encrypted messages without revealing individual participant identities. The XOR operation effectively masks the original data, creating an anonymized slot assignment structure.

The diagram further illustrates the aggregation of encrypted messages into a consolidated data report. The topmost section of the figure shows the final output, a sequence of anonymized messages, msg₁, msg₂, and msg₃, aligned horizontally. This sequence represents the aggregated data report, which is transmitted to the task requester without compromising participant privacy.

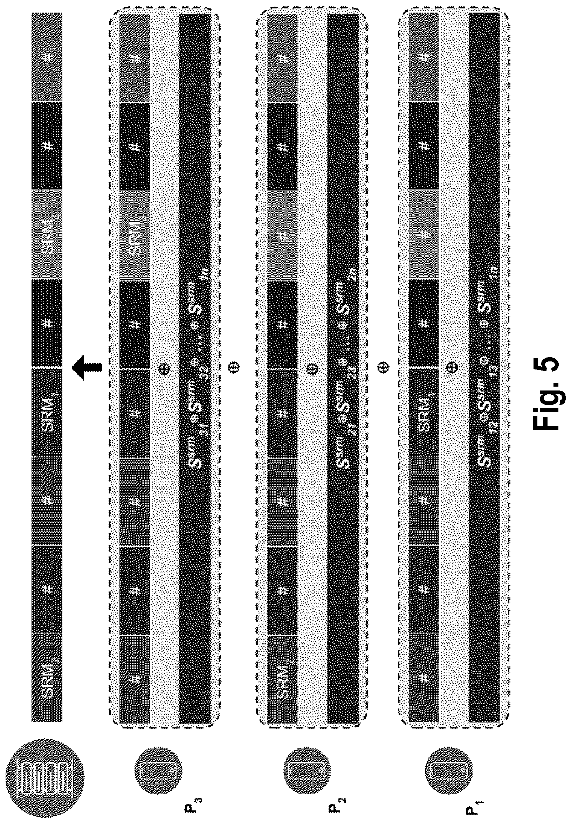

Fig. 5 illustrates the process of slot reservation and assignment in a participatory sensing system. The diagram depicts the sequential steps involved in securing slot reservations by participants and the subsequent aggregation of these reservations to form an anonymized slot assignment structure.

In the slot reservation stage, positions are determined using an optimized process, combining the ideas of DC-net and bulk transfer. Participants and the server collectively agree on the format, length of slot reservation messages Lₛᵣₘ, and the number of redundancy slots M (> N) used in the slot reservation stage. Participants initiate the process by locally generating a fresh encrypted random secret pseudonym as a slot reservation message, srmᵢ, of length Lₛᵣₘ bits. Participants transfer their SRMs to the server using bulk transfer. To do so, they exchange pairwise secret QKD keys S^{srm}_{i,j} of length equivalent to the slot reservation vector L_{V}^{srm} = M.Lₛᵣₘ. Each participant then choose random slots to hold their SRMs and generate a Slot reservation message vector: ${C}_{i}^{msg} = {{\left.00⋯0\right| {{{msg}_{i}}^{︷}}^{Lmsg} \left|00⋯0\right.}_{︸}}_{Lv}$. Slot reservation message ciphertext, Cᵢ, are generated by each participant by XORing all secret seeds S^{srm}_{i,j}, and the vectors Cᵢ^{srm}. Cᵢ = Cᵢ^{srm} ⊕Sᵢ₁^{srm} ⊕···⊕Sᵢ₍ᵢ₋₁₎^{srm} ⊕Sᵢ₍ᵢ₊₁₎^{srm} ⊕···⊕S_{iN}^{srm}. The described process closely resembles the generation of the bitstream in the equation Cᵢ = Cᵢ^{msg} ⊕ Sᵢ₁ ⊕ ··· ⊕ Sᵢ₍ᵢ₋₁₎ ⊕ Sᵢ₍ᵢ₊₁₎ ⊕ ··· ⊕ S_{iN} mentioned further above. However, the key distinction lies in encoding the i-th participant's slot reservation request instead of their message msgᵢ. Notably, all slot reservation messages SRMs share the same bit length in this protocol.

Subsequently, each participant Pᵢ transmits its generated Cᵢ to the server using the bulk transfer protocol. Finally, the server assembles the slot reservation vector C^{srm} by executing an XOR operation on all received Ci: ${C}^{rsm} = {C}_{1} ⊕ {C}_{2} ⊕ ⋯ ⊕ {C}_{N} = {{# \left|⋯\right| {SRM}_{πN \left(1\right)} \left|⋯\right| # \left|⋯\right| {SRM}_{πN \left(N\right)} \left|⋯\right| #}_{︸}}_{M}$

The presence of # denotes an empty slot filled with null bits, and to prevent collisions, it's recommended that the available slots (M) exceed the number of participants (N). The server checks for slot collisions, confirming if multiple participants chose the same slot, and publishes C. Participants verify their SRMs in C^{srm}, if there is a collision detected all participants rerun the slot reservation protocol by generating fresh Cᵢ. Participants, with no collision detected, places its SRM in the same slot as before; on the contrary, the slot that has collided participant needs to select another unused slot to carry its SRM. This process repeats until all participants can confirm a unique slot. Finally, the server concatenates the vector by removing the unoccupied redundant slot and outputs a vector where each participant can verify its unique slot.

It is noted that there may be a setup stage carried out before the above-explained slot reservation stage. To participate, new members must register with the server, providing their real identities. This registration is crucial for incorporating specific location tasks or information into the survey. Participants from the same geographic area may be grouped together to enhance efficiency and ensure anonymity through resolution degrading. Every pair of participants (Pᵢ and Pⱼ) can exchange pairwise common secret keys by performing e.g. Quantum Key Distribution (QKD). Each participant, therefore, share (N - 1) pairwise keys with other participants.

After the above-explained slot reservation stage, there may be a data submission stage. Each participant Pi has a unique slot position, posᵢ ∈ {1 ... N}. Moreover, Pᵢ holds the intended message msgᵢ of length L_{msg} willing to report. The bulk transfer protocol is used once more to report the data to the server directly. Finally, the server obtains the vector C: *C = msg*_{*πN*(1)}|*msg*_{*πN*(2)}| ···|*msg*_{*πN*(*N*)}. The server publishes the received data C to each participant. Subsequently, each participant signals a validation flag to the server using the established data submission protocol. The flag, a binary decision bit, is set to 1 when the data content is correct; otherwise, it is set to zero. The server receives the report vector and searches for errors. If all data is correct, SP transmits the data vector C to the task requester. Conversely, if one or more zeros are present in the flag vector, SP initiates an error recovery step by rerunning from collision detection protocol to rectify the data.

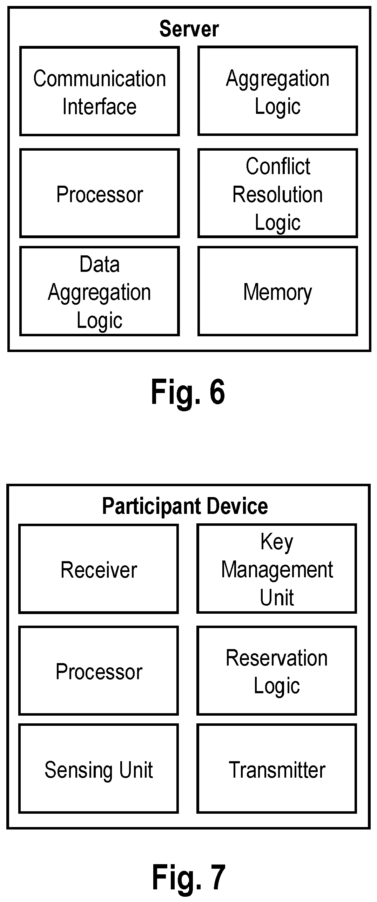

Fig. 6 shows a schematic block diagram of an exemplary server. The server comprises a communication interface configured to receive a sensing task request from a task requester and to interact with a group of participant devices. Further, the server comprises a processor configured to identify eligible participants P1, P2, P3, Pn based on the sensing task request. The server further comprises an aggregation logic configured to process encrypted slot reservation messages SRMs using a privacy-preserving aggregation technique to generate an anonymized slot assignment structure. Further, the server comprises a conflict resolution logic configured to detect slot conflicts and to coordinate re-submission of slot reservation messages (SRMs) by affected participants (P1, P2, P3, Pn). The server comprises a data aggregation logic configured to receive secured data messages from the participants (P1, P2, P3, Pn) and to construct an anonymized data report for delivery to the task requester. A memory may serve as a storage medium for the server, retaining data and instructions for its operation.

Fig. 7 shows a schematic block diagram of an exemplary participant device. The participant device comprises a receiver configured to obtain a sensing task request from the server. Further, the participant device comprises key management logic configured to establish secure communication keys S₁₂, ..., S₃ₙ with one or more peer participant devices. The participant device further comprises reservation logic configured to generate a slot reservation message SRM including the pseudonymous identifier and to encrypt the message using the secure communication keys S₁₂, ..., S₃ₙ established for the participant P1, P2, P3, Pn. Further, the participant device comprises a sensing unit configured to collect sensing data according to the sensing task request. The participant device further comprises a transmitter configured to send the encrypted slot reservation message SRM and the secured data message corresponding to an assigned submission slot to the server.

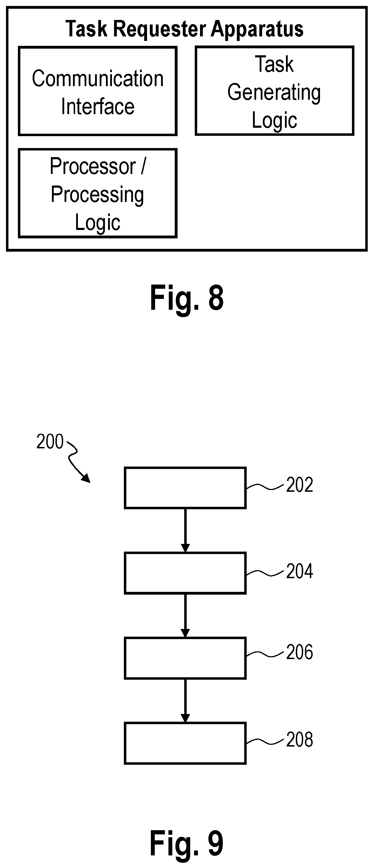

Fig. 8 shows a schematic block diagram of an exemplary task requester apparatus. The task requester apparatus comprises a communication interface configured to transmit the sensing task request to the server and receive the anonymized data report in response. Further, the task requester apparatus comprises task generating logic configured to generate the sensing task request. The task requester apparatus further comprises processing logic configured to extract sensing insights from the anonymized data report without revealing participant P1, P2, P3, Pn identities.

Fig. 9 shows a schematic flowchart of a method 200 for initiating and receiving data in participatory sensing. The method is applied to a task requester. At 202, the task requester generates a sensing task request comprising one or more sensing parameters. These parameters define the scope and requirements of the sensing task, including the type of data to be collected, the geographical area of interest, the duration of the sensing activity, and any specific conditions or constraints that must be met. At 204, the sensing task request generated at 202 is then transmitted to a server. The server is configured to select participants and coordinate anonymous data reporting. The transmission of the sensing task request involves sending the defined parameters to the server, which will then identify eligible participants based on the criteria specified in the request. The server ensures that the selected participants can provide the required sensing data while maintaining their anonymity. At 206, upon receiving the sensing task request, the server processes the request and coordinates the data collection from the participants. The server aggregates the secured sensing data messages submitted by the participants and generates an anonymized data report. This anonymized data report is then transmitted back to the task requester. The anonymized data report contains the collected sensing data, but it is structured in such a way that the individual identities of the participants are not revealed. This ensures privacy and confidentiality for the participants involved in the sensing task. At 208, the task requester processes the anonymized data report to extract sensing insights. This step involves analyzing the aggregated data to derive meaningful information and insights that can be used for decision-making, research, or other purposes. The processing of the anonymized data report is done without revealing the identities of the individual participants, thereby preserving their privacy.

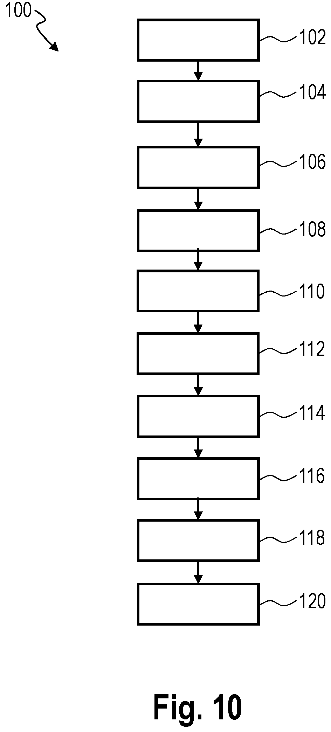

Fig. 10 shows a schematic flowchart of a method 100 for data reporting in participatory sensing. The method is applied to a server. At 102, the server receives a sensing task request from a task requester. This task request includes specific parameters that define the sensing task to be performed. At 104, the server selects a group of participants P1, P2, P3, Pn based on the received sensing task request. The selection process may involve evaluating the participants' capabilities, availability, and relevance to the task requirements. 106 involves establishing secure communication keys S12, ..., S3n between the selected participants. These keys are used to ensure secure and private communication among the participants during the data reporting process. At 108, each participant sends a slot reservation message to the server. These messages are secured using participant-specific encryption, ensuring that only the intended recipient can decrypt and read the message. 110 entails processing the received slot reservation messages using a privacy-preserving aggregation technique. This technique produces an anonymized slot assignment structure, which ensures that the participants' identities remain confidential. 112 involves coordinating the resolution of slot conflicts. The server ensures that each participant is assigned a unique submission slot by identifying overlapping slot reservation messages and instructing affected participants to repeat the slot reservation procedure if necessary. At 114, the server instructs each participant to submit a data report using their respective assigned submission slot. This step ensures that the data reports are submitted in an organized and non-conflicting manner. 116 involves receiving secured data messages from each participant. These messages are associated with the assigned submission slots and are secured to maintain the confidentiality of the data. At 118, the server aggregates the received secured data messages to construct an anonymized data report. This aggregation process ensures that the data collected from the participants is combined in a manner that preserves their privacy. At 120, the server transmits the anonymized data report to the task requester. The task requester can then process this report to extract valuable insights without revealing the individual identities of the participants.

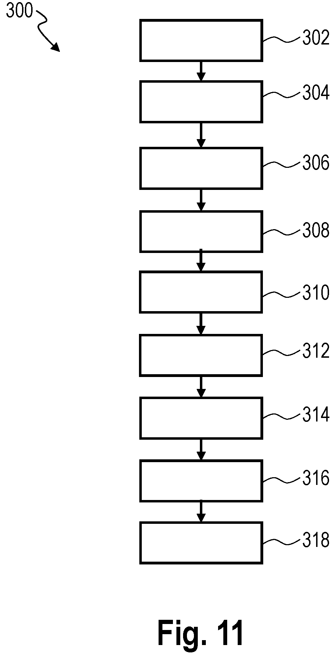

Fig. 11 shows a schematic flowchart of a method 300 for anonymously contributing data in participatory sensing. The method is applied to a participant device. At 302, the participant device receives a sensing task request from a server. This task request initiates the participatory sensing process, outlining the parameters and requirements for data collection. Following the receipt of the task request, 304 involves establishing secure communication keys with peer participants. This step is for ensuring the confidentiality and integrity of the data exchanged between participant devices. The secure communication keys facilitate encrypted communication, preventing unauthorized access to the data being transmitted. 306 entails the generation of a slot reservation message by the participant device. This message includes a pseudonymous identifier, which serves to anonymize the participant's identity during the data reporting process. The pseudonymous identifier is a critical component in maintaining participant anonymity while allowing the server to manage slot assignments effectively. At 308, the slot reservation message is secured using participant-specific encryption based on the established secure communication keys. This encryption process ensures that the slot reservation message can only be decrypted by authorized entities, further safeguarding participant anonymity. 310 involves the submission of the secured slot reservation message to the server. The server uses this message to coordinate the assignment of submission slots, ensuring that each participant is allocated a unique slot for data reporting. This step is essential for organizing the data collection process and preventing conflicts in slot assignments. Upon receiving feedback from the server, at 312, the participant device determines whether a unique submission slot has been successfully assigned to the participant. If a conflict arises, the participant may need to repeat the slot reservation procedure to obtain a unique slot. This step ensures that each participant can contribute data without interference from other participants. 314 involves generating a secured data message comprising sensor readings collected by the participant device. These sensor readings are gathered in accordance with the parameters specified in the sensing task request, providing the necessary data for the participatory sensing task. At 316, the secured data message is associated with the assigned submission slot and further secured using the established secure communication keys. This additional encryption layer ensures the confidentiality of the sensor data during transmission to the server. 318 involves transmitting the secured data message to the server, enabling anonymous aggregation of the data. The server aggregates the data messages from all participants, constructing an anonymized data report for delivery to the task requester. This step completes the participatory sensing process, allowing the task requester to extract insights from the collected data without revealing individual participant identities.

### LIST OF REFERENCE SIGNS

- P1-PN: Participant (device)
- Sᵢⱼ: secure communication keys
- Cᵢ^{msg}: secured data message
- Cᵢ: anonymized data report
- SRM: slot reservation message
- #: pseudonymous identifier
- msg: message
- 100: method
- 1xx: method step
- 200: method
- 2xx: method step
- 300: method
- 3xx: method step

## Claims

1. A method (100) for data reporting in participatory sensing, the method being applied to a server, and the method comprising:
receiving (102) a sensing task request from a task requester;
selecting (104) a group of participants (P1, P2, P3, Pn) based on the sensing task request;
establishing (106) secure communication keys (S₁₂, ..., S₃ₙ) between participants (P1, P2, P3, Pn);
receiving (108), from each participant (P1, P2, P3, Pn), a slot reservation message (SRM) that is secured using participant-specific encryption;
processing (110) the received slot reservation messages (SRMs) using a privacy-preserving aggregation technique to produce an anonymized slot assignment structure;
coordinating (112) resolution of slot conflicts to ensure that each participant (P1, P2, P3, Pn) is assigned a unique submission slot;
instructing (114) each participant (P1, P2, P3, Pn) to submit a data report using the respective assigned submission slot;
receiving (116), from each participant (P1, P2, P3, Pn), a secured data message associated with the assigned submission slot;
aggregating (118) the received secured data messages to construct an anonymized data report; and
transmitting (120) the anonymized data report to the task requester.

2. The method of claim 1, wherein the secure communication keys (S₁₂, ..., S₃ₙ) are established by performing quantum key distribution, QKD, between each pair of participants (P1, P2, P3, Pn).

3. The method of claim 1 or 2, wherein each slot reservation message (SRM) comprises a pseudonymous identifier generated by the respective participant (P1, P2, P3, Pn) and having a fixed bit length.

4. The method of any one of the preceding claims, wherein the privacy-preserving aggregation technique comprises a bitwise XOR operation applied across the secured slot reservation messages (SRMs).

5. The method of any one of the preceding claims, wherein the anonymized slot assignment structure comprises a vector of predefined slot positions, each configured to receive a single pseudonymous identifier.

6. The method of any one of the preceding claims, wherein coordinating resolution of slot conflicts comprises identifying overlapping slot reservation messages (SRMs) and instructing affected participants (P1, P2, P3, Pn) to repeat the slot reservation procedure.

7. The method of any one of the preceding claims, wherein each secured data message comprises sensor data collected by a mobile device associated with the respective participant (P1, P2, P3, Pn).

8. The method of any one of the preceding claims, further comprising receiving, from each participant (P1, P2, P3, Pn), a validation message indicating whether the participant's secured data message was correctly included in the anonymized data report.

9. The method of claim 8, further comprising repeating the receiving and aggregating of the secured data messages in response to any validation message indicating an error.

10. The method of any one of the preceding claims, wherein the anonymized data report comprises a sequence of encrypted data blocks, each corresponding to one assigned submission slot.

11. A method (200) for initiating and receiving data in participatory sensing, the method being applied to a task requester, and the method comprising:
generating (202) a sensing task request comprising one or more sensing parameters;
transmitting (204) the sensing task request to a server configured to select participants (P1, P2, P3, Pn) and coordinate anonymous data reporting;
receiving (206), from the server, an anonymized data report generated by aggregating secured sensing data messages submitted by a group of participants (P1, P2, P3, Pn) in response to the sensing task request;
processing (208) the anonymized data report to extract sensing insights without revealing individual participant (P1, P2, P3, Pn) identities.

12. A method (300) for anonymously contributing data in participatory sensing, the method being applied to a participant device, and the method comprising:
receiving (302) a sensing task request from a server;
establishing (304) secure communication keys (S₁₂, ..., S₃ₙ) with one or more peer participants (P1, P2, P3, Pn);
generating (306) a slot reservation message (SRM) comprising a pseudonymous identifier;
securing (308) the slot reservation message (SRM) using participant-specific encryption based on the established secure communication keys (S₁₂, ..., S₃ₙ);
submitting (310) the secured slot reservation message (SRM) to the server;
determining, based on feedback from the server, whether a unique submission slot has been successfully assigned;
generating (312) a secured data message comprising sensor readings in accordance with the sensing task request;
associating (314) the secured data message with the assigned submission slot;
securing (316) the data message using the established secure communication keys (S₁₂, ..., S₃ₙ); and
transmitting (318) the secured data message to the server to enable anonymous aggregation.

13. A task requester apparatus configured for initiating and receiving data in participatory sensing, the apparatus comprising:
a communication interface configured to transmit a sensing task request to a server and receive an anonymized data report in response;
task generating logic configured to generate the sensing task request;
processing logic configured to extract sensing insights from the anonymized data report without revealing participant (P1, P2, P3, Pn) identities.

14. A participant device configured to contribute data anonymously in participatory sensing, the device comprising:
a receiver configured to obtain a sensing task request from a server;
key management logic configured to establish secure communication keys (S₁₂, ..., S₃ₙ) with one or more peer participant devices;
reservation logic configured to generate a slot reservation message (SRM) including a pseudonymous identifier and to encrypt the message using the secure communication keys (S₁₂, ..., S₃ₙ) established for the participant (P1, P2, P3, Pn);
a sensing unit configured to collect sensing data according to the sensing task request;
a transmitter configured to send the encrypted slot reservation message (SRM) and a secured data message corresponding to an assigned submission slot to the server.

15. A server configured to support anonymous data reporting in participatory sensing, the server comprising:
a communication interface configured to receive a sensing task request from a task requester and to interact with a group of participant devices;
a processor configured to identify eligible participants (P1, P2, P3, Pn) based on the sensing task request;
aggregation logic configured to process encrypted slot reservation messages (SRMs) using a privacy-preserving aggregation technique to generate an anonymized slot assignment structure;
conflict resolution logic configured to detect slot conflicts and to coordinate re-submission of slot reservation messages (SRMs) by affected participants (P1, P2, P3, Pn); and
data aggregation logic configured to receive secured data messages from the participants (P1, P2, P3, Pn) and to construct an anonymized data report for delivery to the task requester.
